# EUROPEAN PATENT SPECIFICATION

(11) **EP 1 841 999 B1**
(45) Date of publication and mention of the grant of the patent: **13.03.2013**
(21) Application number: 05813448.7
(22) Date of filing: 07.12.2005
(51) Int. Cl.: F16L 25/00, F16L 21/035, F16L 21/03, B28B 21/56

(54) **SEALING RING**
DICHTUNGSRING
BAGUE D'ETANCHEITE

(30) Priority: 27.01.2005 SE 0500202
(43) Date of publication of application: 10.10.2007
(73) Proprietor: Trelleborg Pipe Seals Lelystad BV, 8218 NJ Lelystad (NL)
(72) Inventor: CAVKA, Elvir, S-331 41 Värnamo (SE); NILSSON, Ulf, S-331 33 Värnamo (SE)
(74) Representative: Flügel Preissner Kastel Schober
(86) International application number: PCT/SE2005/001846
(87) International publication number: WO 2006/080872

(56) References cited:
- EP-A2- 0 853 209
- WO-A1-97/35138
- DE-A1- 3 601 757
- DE-A1- 19 638 702
- US-A- 4 299 399
- US-A- 4 946 175

## Description

### Field of the Invention

The present invention relates to a sealing ring for sealing an annular gap between an outer face of a spigot end of a first concrete pipe and an inner face of a socket end of a second concrete pipe, which is to be axially slipped onto the first concrete pipe to form said gap during compression of the sealing ring, which has an annular sealing body, which is adapted to be supported by one of the spigot end and the socket end, and an annular sliding skin, which is adapted to come into engagement with the other of the spigot end and the socket end along a circumferential engagement line, when the second concrete pipe is being axially slipped onto the first concrete pipe, and which at its edges is circumferentially connected to the sealing body in such a manner that a thin, closed annular gap containing a lubricant exists between the sealing body and the sliding skin.

### Background Art

When the sealing body of such a sealing ring is to be supported by the socket end, the sealing ring is usually embedded in the same during casting of the second concrete pipe provided with the socket end. The sealing ring is mounted on a bottom ring, which forms part of a mould for casting the second concrete pipe, the sliding skin being made to abut against the bottom ring and thus being clamped between this and the sealing body. If the sealing ring is incorrectly positioned on the bottom ring, it may end up in an incorrect embedded position in the socket end and concrete may penetrate between the sealing ring and the bottom ring during casting, which of course reduces the sealing ring capacity of sealing against the spigot end of the first concrete pipe. It is therefore essential for the sealing ring to be correctly placed and held on the bottom ring.

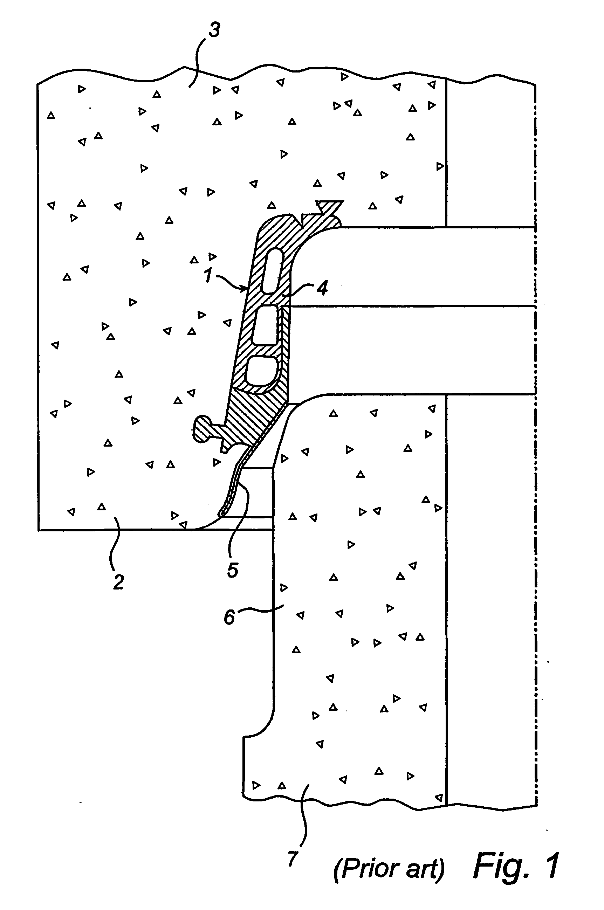

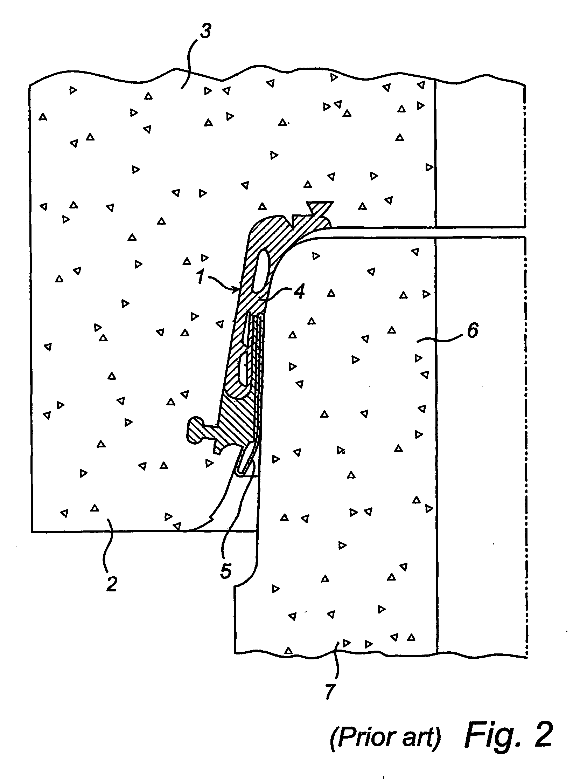

A prior-art sealing ring provided with a sliding skin will now be described with reference to Figs 1 and 2. The prior-art sealing ring 1 is shown in cross-section in Figs 1 and 2, in which it is shown supported by a socket end 2 of a concrete pipe 3. Its sealing body 4 is embedded in the socket end 2, and its sliding skin 5 is positioned radially inside the sealing body 4 in order to come into engagement with a spigot end 6 of a concrete pipe 7 when inserting the spigot end 6 into the socket end 2 of the concrete pipe 3. The sliding skin 5 extends, as illustrated in Fig. 1, a distance axially outside the sealing body 4. Since the space defined by the sliding skin 5 and the sealing body 4 and the two axially projecting layers of the sliding skin 5 contains a lubricant, the sliding skin 5 is slidably displaced as the insertion of the spigot end 6 into the socket end 2 in the axial direction continues further into the socket end 2 until the spigot end 6 reaches its mounting position shown in Fig. 2, in which the sealing ring 1 seals the annular gap between the inner face of the socket end 2 and the outer face of the spigot end 6.

The task of the sliding skin 5 thus is to reduce the mounting forces that are required for the insertion of the spigot end 6 into the socket end 2. The sliding skin 5 must have such a great width, that is extent in the axial direction of the concrete pipes 3 and 7, that this task can be performed over the entire insertion distance of the spigot end 6, that is from the point where the spigot end engages the sliding skin 5 until it reaches its mounting position (Fig. 2). The greater the width of the sliding skin 5, the greater is the risk, however, that the sealing ring 1, when mounted on a bottom ring in the manner described above, will be displaced axially on the bottom ring during casting of the concrete pipe 3 provided with the socket end 2. In this respect, it is thus desirable for the width of the sliding skin 5 instead to be as small as possible.

Other seals are also known in the art. By way of example, US 4946175 discloses a seal with a skin which, together with a main portion of the seal, forms a pocket filled with lubricant. The pocket is formed by releasably glueing or vulcanizing a free end of the skin to the main portion. WO 9735138 discloses a seal extruded integrally with a protective strip for protecting a lubricant on a sliding surface of the seal. The protective strip is adapted to be removed before the spigot end is inserted into a socket, such that the lubricant is uncovered. DE 3601757 discloses a seal provided with a skin which, together with a main portion of the seal, forms a pocket filled with lubricant. A thin-walled portion of the skin is adapted to break when the pipes are joined. DE 19638702 discloses a seal provided with a slip ring attached at one end to the main body of the seal. A tear initiation allows the slip-ring to be torn off the main body of the seal so as to allow an arbitrary length of engagement between spigot end and socket.

### Summary of the Invention

The object of the present invention therefore is to provide a sealing ring, which is designed so that its sliding skin can be given such a small width that the above risk of displacement is significantly reduced while at the same time the sliding skin can perform its friction-reducing task over the entire insertion distance of the spigot end.

According to the invention, the object is achieved by a sealing ring, which is of the type stated by way of introduction and characterised in that the sliding skin has a circumferential tear initiation which is positioned axially outside the engagement line with respect to said one end and which is adapted to break when the sliding skin engages said other end while the second concrete pipe is slipped onto the first concrete pipe.

The sliding skin is made of an elastic rubber material and the tear initiation is a perforation line, which is formed of a plurality of perforations which due to the elasticity of the rubber material are self-closed.

The perforation line is advantageously formed in the bottom of a circumferential groove in the sliding skin.

This groove is preferably V-shaped in cross-section, and its depth is advantageously about 80% of the thickness of the sliding skin.

The sliding skin is preferably formed integrally with the sealing body.

The sealing body preferably has a recess for receiving a part of the sliding skin, which part is slidably displaced in use of the sealing ring.

### Brief Description of the Drawings

Fig. 1 is a sectional view and illustrates the above-described prior-art sealing ring supported by a socket end of one concrete pipe, and a spigot end of another concrete pipe just going to be moved into engagement with the sliding skin of the sealing ring.
Fig. 2 corresponds to Fig. 1 but shows the spigot end inserted to its mounting position in the socket end.
Fig. 3 is a sectional view of a sealing ring according to the invention.
Fig. 4 is an enlarged and widened sectional view of the sealing ring in Fig. 3 and illustrates a tear initiation formed in the sliding skin of the sealing ring.
Fig. 5 is a sectional view of the sealing ring in Fig. 3 mounted on a bottom ring.
Fig. 6 is a sectional view of the sealing ring in Fig. 3 supported by a socket end of one concrete pipe, a spigot end of another concrete pipe just moved into engagement with the sliding skin of the sealing ring.
Fig. 7 corresponds to Fig. 6 but illustrates the socket end inserted a further distance into the socket end.
Fig. 8 corresponds to Figs 6 and 7 but illustrates the spigot end inserted to its mounting position in the socket end.

### Description of a Preferred Embodiment

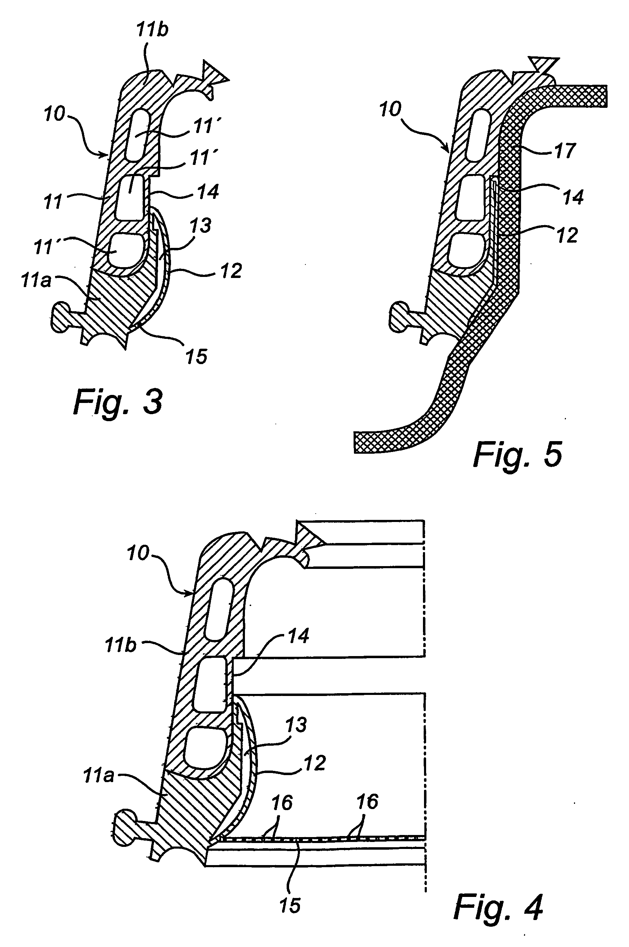

The sealing ring 10 shown in Fig. 3, which in a manner that will be described in more detail below is arranged to be embedded in the socket end of a concrete pipe, has an annular sealing body 11 and an annular sealing skin 12 positioned radially inside the sealing body. The sealing body 11 of the sealing ring 10 has a first portion 11a of an elastic soft rubber material and a second portion 11b of an elastic hard rubber material which is positioned axially inside the first portion 11a with respect to said socket end. The two rubber materials advantageously have a hardness of 35-45 IRHD and 65-75 IRHD respectively. The second portion 11b has circumferential inner cavities 11', which allow compression of the sealing ring 10 when being used. The sealing ring 10 is made by coextrusion, its sliding skin 12 being made of the same soft rubber material as the first portion 11a of the sealing body 11 and in one piece with this portion 11a.

The sliding skin 12 is at its edges circumferentially connected to the first portion 11a of the sealing body 11 in such a manner that a thin, closed annular gap 13 exists between this portion and the sliding skin 12. For reasons of clarity the annular gap 13 is shown in Figs 3 and 4 with a slightly exaggerated radial width. The annular gap 13 contains a lubricant.

The second portion 11b of the sealing body 11 has in its radially inner face a circumferential recess 14 which is positioned axially inside the sliding skin 12 and adapted to receive a part of the sliding skin 12 in use of the sealing ring 10.

The sliding skin 12 has in the vicinity of its axially outer edge a circumferential groove 15 which is essentially V-shaped in cross-section. A perforation line, which is formed of a plurality of perforations 16 formed in the bottom of the groove 15, extends along the entire groove 15. The perforations 16, which due to the elasticity of the soft rubber material are self-closed and thus do not allow any leakage of lubricant but which for reasons of clarity are shown open in Fig. 4, are uniformly distributed along the groove 15. The depth of the groove 15 is here about 80% of the thickness of the sliding skin 12. The groove 15 and the perforations 16 form a circumferential tear indication, along which the sliding skin 12 in a manner that will be described in more detail below breaks in use of the sealing ring 10.

When manufacturing a concrete pipe provided with a socket end, the sealing ring 10 is mounted, as shown in Fig. 5, on a bottom ring 17, which forms part of a mould for casting this concrete pipe. When the sealing ring 10 is mounted on the bottom ring 17, the sliding skin 12 abuts against the bottom ring, clamped between this and the sealing body 11 and partially received in the recess 14. Casting occurs by the mould, in which the bottom ring 17 is included, being filled from above with concrete.

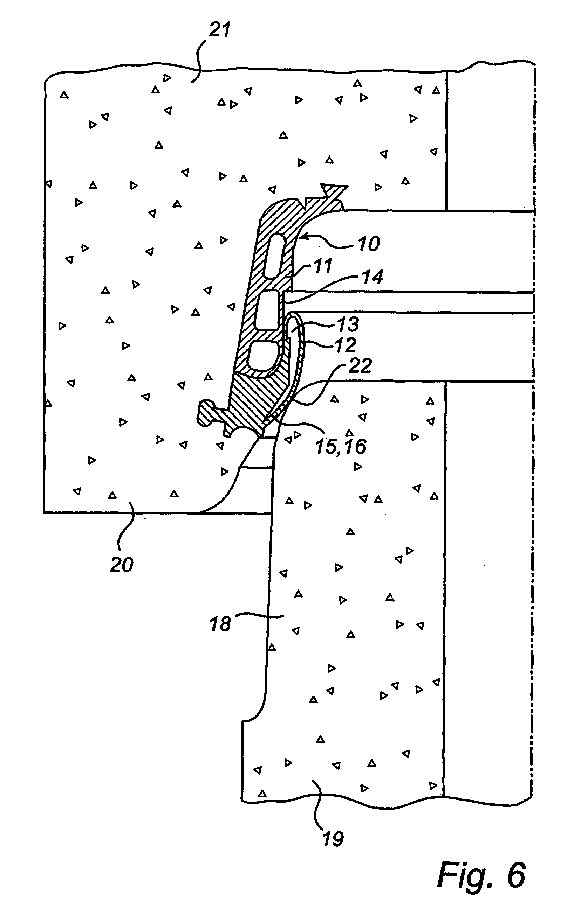

A first concrete pipe 19 provided with a spigot end 18 and a second concrete pipe 21 provided with a socket end 20 and manufactured in the manner described above are shown in Figs 6-8. A sealing ring 10 according to the invention is thus embedded in the socket end 20 of the second concrete pipe 21.

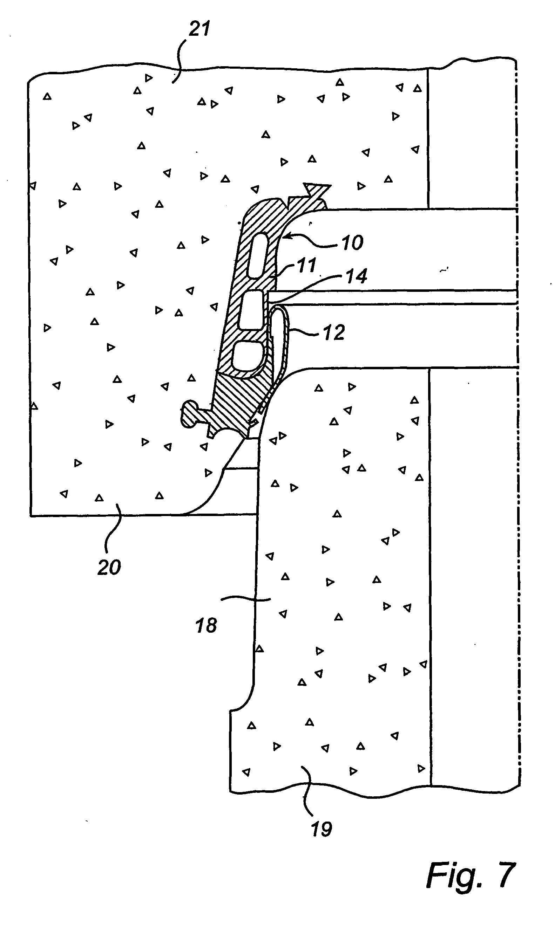

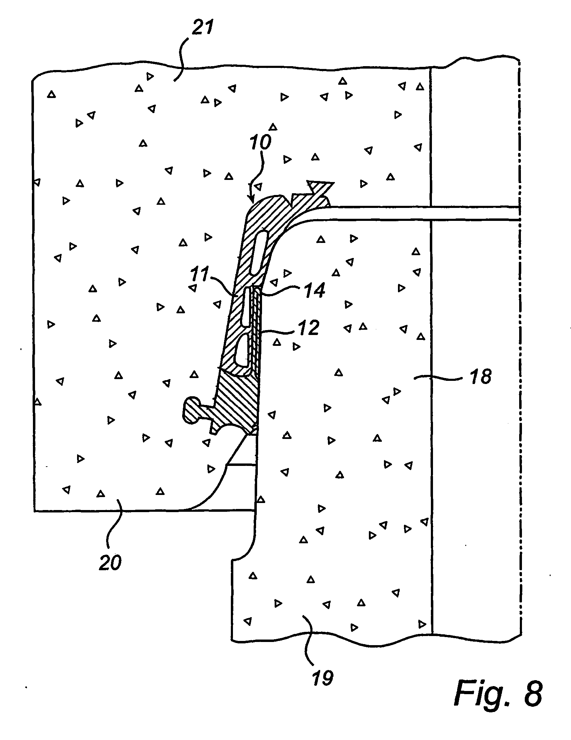

When the second concrete pipe 21 provided with the socket end 20 is slipped onto the first concrete pipe 19 provided with the spigot end 18 (or, if desirable, when the first concrete pipe 19 is inserted into the second concrete pipe 21), the spigot end 18 being inserted into the socket end 20, the sliding skin 12 will come into engagement with the spigot end 18 along a circumferential engagement line 22, which is positioned, with respect to the socket end 20, axially inside the groove 15 of the sliding skin 12, that is axially inside the tear initiation 15, 16 (see Fig. 6). In the continued slipping-on of the second concrete pipe 21, the tear initiation of the sliding skin 12 breaks (see Fig. 7), after which the sliding skin 12, while sliding on the sealing body 11, is entrained by the spigot end 18 in the continued insertion thereof into the socket end 20. During this sliding movement of the sliding skin 12, part of the sliding skin is received in the recess 14 in the second portion 11b of the sealing body 11. The sliding movement continues until the spigot end 18 reaches its inserted position or mounting position (Fig. 8), in which the sealing ring 10 thus seals the annular gap between the outer and inner face respectively of the spigot end 18 and the socket end 20.

Since the sliding skin 12 is provided with a tear initiation 15, 16, it can, with its friction-reducing function maintained, be made considerably narrower than a corresponding sliding skin without a tear initiation (Figs 1 and 2). As a result, the sealing ring 10 can be held in a reliable manner on the bottom ring 7 during casting of a concrete pipe provided with a socket end.

The above-described concept of providing the sliding skin of a sealing ring with a tear initiation can be used also for a sealing ring which is adapted to be supported by a spigot end. The sliding skin is then located radially outside the sealing body, which is adapted to abut against the spigot end, and adapted to come into engagement with a socket end in order to break when sliding the same onto the spigot end. By this sliding skin being provided with a tear initiation, it can be made narrow, which means that a considerable saving of material can be ensured.

## Claims

1. A sealing ring for sealing an annular gap between an outer face of a spigot end (18) of a first concrete pipe (19) and an inner face of a socket end (20) of a second concrete pipe (21), which is to be axially slipped onto the first concrete pipe (19) to form said gap during compression of the sealing ring (10), which has an annular sealing body (11), which is adapted to be supported by one (20) of the spigot end (18) and the socket end (20), and an annular sliding skin (12) of an elastic rubber material, which sliding skin (12) is adapted to come into engagement with the other (18) of the spigot end (18) and the socket end (20) along a circumferential engagement line (22), when the second concrete pipe (21) is being axially slipped onto the first concrete pipe (19), and which at its edges is circumferentially connected to the sealing body (11) in such a manner that a thin, closed annular gap (13) containing a lubricant exists between the sealing body (11) and the sliding skin (12), **characterised in that** the sliding skin (12) has a circumferential tear initiation (15, 16) comprising a perforation line formed of a plurality of perforations (16) which due to the elasticity of the rubber material are self-closed, which tear initiation (15, 16) is positioned axially outside the engagement line (22) with respect to said one end (20) and adapted to break when the sliding skin (12) engages said other end (18) while the second concrete pipe (21) is slipped onto the first concrete pipe (19).

2. A sealing ring as claimed in claim 1, in which the perforation line is formed in the bottom of a circumferential groove (15) in the sliding skin (12).

3. A sealing ring as claimed in claim 2, in which the groove (15) is essentially V-shaped in cross-section.

4. A sealing ring as claimed in claim 2 or 3, in which the depth of the groove (15) is about 80% of the thickness of the sliding skin (12).

5. A sealing ring as claimed in any one of the preceding claims, in which the sliding skin (12) is formed integrally with the sealing body (11).

6. A sealing ring as claimed in any one of the preceding claims, in which the sealing body (11) has a recess (14) for receiving a part of the sliding skin (12), which part is slidably displaced in use of the sealing ring.

## Patentansprüche

1. Dichtring zum Abdichten eines ringförmigen Spalts zwischen einer Außenfläche eines Einsteckendes (18) eines ersten Betonrohrs (19) und einer Innenfläche eines Anschlussendstücks (20) eines zweiten Betonrohrs (21), das axial auf das erste Betonrohr (19) geschoben werden soll, um den Spalt während der Kompression des Ringrings (10) zu bilden,
welcher einen ringförmigen Dichtkörper (11), der angepasst ist, durch einen (20) des Einsteckendes (18) oder des Anschlussendstücks (20) gestützt zu sein, und eine ringförmige Gleithaut (12) aus einem elastischen Gummimaterial hat, wobei die Gleithaut (12) angepasst ist, in Eingriff mit dem anderen (18) des Einsteckendes (18) oder des Anschlussendstücks (20) entlang einer Umfangseingriffslinie (22) zu kommen, wenn das zweite Betonrohr (21) axial auf das erste Betonrohr (19) geschoben ist, und die an ihren Kanten in Umfangsrichtung mit dem Dichtkörper (11) derart verbunden ist, dass ein dünner, geschlossener, ringförmiger Spalt (13), der ein Gleitmittel enthält, zwischen dem Dichtkörper (11) und der Gleithaut (12) existiert, **dadurch gekennzeichnet, dass**
die Gleithaut (12) eine Anreißstelle (15, 16) in Umfangsrichtung hat, die eine Perforationslinie umfasst, die durch eine Mehrzahl von Perforationen (16) gebildet ist, die aufgrund der Elastizität des Gummimaterials selbstschließend sind,
wobei die Anreißstelle (15, 16) axial außerhalb der Eingriffslinie (22) in Bezug auf das eine Ende (20) positioniert ist und angepasst ist, zu brechen, wenn die Gleithaut (12) mit dem anderen Ende (18) in Eingriff steht, während das zweite Betonrohr (21) auf das erste Betonrohr (19) geschoben ist.

2. Dichtungsring nach Anspruch 1, bei dem die Perforationslinie in dem Boden einer Umfangsnut (15) in der Gleithaut (12) gebildet ist.

3. Dichtungsring nach Anspruch 2, bei dem die Nut (15) im Querschnitt im Wesentlichen V-förmig ist.

4. Dichtungsring nach Anspruch 2 oder 3, bei dem die Tiefe der Nut (15) ungefähr 80 % der Dicke der Gleithaut (12) ist.

5. Dichtungsring nach einem der voranstehenden Ansprüche, bei dem die Gleithaut (12) integral mit dem Dichtungskörper (11) gebildet ist.

6. Dichtungsring nach einem der voranstehenden Ansprüche, bei dem der Dichtungskörper (11) eine Ausnehmung (14) zum Aufnehmen eines Teils der Gleithaut (12) hat, deren Teil gleitend bei der Verwendung des Dichtungsrings verschoben wird.

## Revendications

1. Bague d'étanchéité pour étancher un intervalle annulaire entre une face extérieure d'un embout lisse (18) d'un premier tube en ciment (19) et une face intérieure d'un culot terminal (20) d'un second tube en ciment (21) qui est destiné à être glissé axialement sur le premier tube en ciment (19) pour former ledit intervalle pendant une compression de la bague d'étanchéité (10), laquelle comprend un corps d'étanchéité annulaire (11), adapté à être supporté par un élément parmi l'embout lisse (18) et le culot terminal (20), et une peau de glissement annulaire (12) en matériau en caoutchouc élastique, ladite peau de glissement (12) étant adaptée à venir en engagement avec l'autre élément parmi l'embout lisse (18) et le culot terminal (20) le long d'une ligne d'engagement circonférentielle (22) quand le second tube en ciment (21) est glissé axialement sur le premier tube en ciment (19) et étant connectée circonférentiellement au niveau de ses bordures avec le corps d'étanchéité (11) d'une manière telle qu'il existe un intervalle annulaire mince et fermé (13) contenant un lubrifiant entre le corps d'étanchéité (11) et la peau de glissement (12), **caractérisée en ce que** la peau de glissement (12) comporte une amorce de déchirage circonférentielle (15, 16) comprenant une ligne de perforation formée d'une pluralité de perforations (16) qui, en raison de l'élasticité du matériau en caoutchouc, sont fermées d'elles-mêmes, ladite amorce de déchirage (15, 16) étant positionnée axialement à l'extérieur de la ligne d'engagement (22) par rapport audit culot terminal (20) et adaptée à se rompre quand la peau de glissement (12) engage ledit embout lisse (18) alors que le second tube en ciment (21) est glissé sur le premier tube en ciment (19).

2. Bague d'étanchéité selon la revendication 1, dans laquelle la ligne de perforation est formée dans le fond d'une rainure circonférentielle (15) dans la peau de glissement (12).

3. Bague d'étanchéité selon la revendication 2, dans laquelle la rainure (15) a une section transversale essentiellement en forme de V.

4. Bague d'étanchéité selon la revendication 2 3, dans laquelle la profondeur de la rainure (15) est environ 80 % de l'épaisseur de la peau de glissement (12).

5. Bague d'étanchéité selon l'une quelconque des revendications précédentes, dans laquelle la peau de glissement (12) est formée intégralement avec le corps d'étanchéité (11).

6. Bague d'étanchéité selon l'une quelconque des revendications précédentes, dans laquelle le corps d'étanchéité (11) comporte un évidement (14) pour recevoir une partie de la peau de glissement (12), ladite partie étant déplacée en coulissement en utilisation de la bague d'étanchéité.
